# EUROPEAN PATENT SPECIFICATION

(11) **EP 1 528 839 B1**
(45) Date of publication and mention of the grant of the patent: **13.01.2010**
(21) Application number: 04022523.7
(22) Date of filing: 22.09.2004
(51) Int. Cl.: H05B 6/06, H05B 6/12

(54) **Induction heating cooker and method for operating the same**
Induktionsheizungskochgerät und Verfahren zu dessen Betrieb
Cuisinière à chauffage par induction et procédé pour son fonctionnement

(30) Priority: 27.10.2003 KR 2003075068
(43) Date of publication of application: 04.05.2005
(73) Proprietor: LG Electronics, Inc., Seoul 150-010 (KR)
(72) Inventor: Kim, Eui Sung, Kyungki-do 440-320 (KR); Ryu, Seung Hee, Anyang-si Kyungki-do 430-018 (KR); Park, Byeong Wook, Namdong-ku Inchun-si 405-246 (KR); Shin, Dong Myung, Kwangmyung-si Kyungki-do 423-033 (KR)
(74) Representative: TER MEER - STEINMEISTER & PARTNER GbR

(56) References cited:
- EP-A- 1 347 669
- US-A- 3 775 577
- US-A- 6 153 863

## Description

### BACKGROUND OF THE INVENTION

### Field of the Invention

The present invention relates to an induction heating cooker and a method for operating the same, and more particularly to an induction heating cooker which includes a container material discriminating unit capable of accurately discriminating whether the material of a cooking container placed in the induction heating cooker is magnetic or non-magnetic, based on a phase change in a resonant capacitor voltage of an inverter circuit caused by a difference between resonance characteristics of a magnetic load and resonance characteristics of a non-magnetic load, and a method for operating the induction heating cooker.

### Description of the Related Art

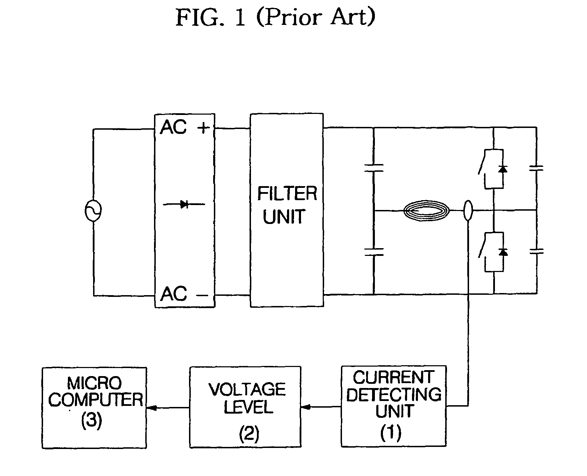

An example of a conventional induction heating cooker is illustrated. The configuration of the conventional induction heating cooker and problems incurred therein will be described below with reference to FIG. 1. FIG. 1 is a block diagram illustrating configurations of an inverter circuit and a container material discriminating unit included in the conventional induction heating cooker.

The induction heating cooker includes an inverter circuit for generating a magnetic field by causing current to flow through a coil in accordance with a switching operation of a switch element, and inducing the magnetic field into a cooking container placed in the induction heating cooker, thereby generating eddy current to heat the cooking container.

The inverter circuit includes an AC power source adapted to supply a general AC voltage, a rectifier adapted to rectify the AC voltage supplied from the AC power source, a filter adapted to filter the rectified voltage outputted from the rectifier, and a switching unit adapted to perform a switching operation in response to the filtered voltage outputted from the filter, thereby applying a high-power, high-frequency voltage to the coil.

Such a conventional induction heating cooker also includes a container material discriminating unit. This container material discriminating unit will be described in detail with reference to FIG. 1. The container material discriminating unit includes a current detecting unit 1 adapted to detect current flowing through the coil of the inverter circuit, and a voltage comparing unit 2 adapted to compare a DC voltage outputted from the current detecting unit 1 with a reference voltage, which is a divided voltage obtained by two resistors.

The current detecting unit 1 includes a current detector, a diode, and a capacitor. The current detector detects high-frequency sine wave current components from current flowing through the coil of the inverter circuit. The detected current is rectified and smoothed by the diode and capacitor, so that a DC voltage is outputted from the current detecting unit 1.

The DC voltage outputted from the current detecting unit 1 is inputted to the voltage comparing unit 2. In the voltage level comparing unit 2, the DC voltage is compared with a reference voltage, which has a predetermined voltage level for discrimination of a magnetic or non-magnetic load. When the DC voltage is less than the reference voltage, the voltage comparing unit 2 determines that the cooking container is a magnetic load, and generates a corresponding discrimination signal. On the other hand, when the DC voltage is more than the reference voltage, the voltage comparing unit 2 determines that the cooking container is a non-magnetic load, and generates a corresponding discrimination signal.

The discrimination signal generated from the voltage comparing unit 2 is applied to a microcomputer 3. When the microcomputer 3 determines, based on the discrimination signal, that the cooking container is a magnetic load, it activates the inverter circuit to heat the cooking container. On the other hand, when the microcomputer 3 determines that the cooking container is a non-magnetic load, it does not activate the inverter circuit, and controls the cooker to operate appropriately.

However, the above-mentioned conventional container material discriminating unit has problems. For example, when the DC voltage indicative of the value of the current detected by the current detecting unit 1 has a level equal to or approximate to the reference voltage, the voltage comparing unit 2, which discriminates the material of the cooking container, may operate erroneously. In this case, the induction heating cooker may operate erroneously.

In order to detect the high-frequency coil current generated from the inverter circuit, it is necessary to use an expensive current detector, which is made of a ferrite material. For this reason, there is an increase in manufacturing costs.

### SUMMARY OF THE INVENTION

The object is solved by the features of the independent claims.

The present invention has been made in view of the above-mentioned problems incurred in the related art, and an object of the invention is to provide an induction heating cooker which includes a container material discriminating unit capable of accurately discriminating whether the material of a cooking container placed in the induction heating cooker is magnetic or non-magnetic, using a phase change in a resonant capacitor voltage of an inverter circuit and a switching pulse signal of the inverter circuit, irrespective of the load of the cooking container, and a method for operating the induction heating cooker.

In accordance with one aspect, the present invention provides an induction heating cooker comprising: a power supply for rectifying an AC voltage, filtering the rectified voltage, and supplying the filtered voltage as an input voltage of the induction heating cooker; an inverter circuit for heating a cooking container placed in the induction heating cooker, using the voltage supplied from the power supply; and a container material discriminating unit for discriminating whether a material of the cooking container is magnetic or non-magnetic, based on a resonant capacitor voltage of the inverter circuit and a switching pulse signal of the inverter circuit, upon an initial operation of the induction heating cooker, whereby the cooking container is selectively heated in accordance with the result of the discrimination.

The container material discriminating unit may comprise: a voltage detecting unit for detecting the resonant capacitor voltage of the inverter circuit, half-wave rectifying the detected voltage, dividing the half-wave-rectified voltage, and outputting the divided voltage as the result of the detection; and a logic determining unit for comparing the voltage outputted from the voltage detecting unit with the switching pulse signal of the inverter circuit, thereby outputting a pulse signal having a pulse width varying depending on whether the material of the cooking container is magnetic or non-magnetic.

The container material discriminating unit may further comprise: a DC voltage smoothing unit for converting the pulse signal outputted from the logic determining unit into a DC voltage; and a microcomputer for determining, based on the DC voltage, whether the material of the cooking container is magnetic or non-magnetic, and controlling the inverter circuit, based on the result of the determination.

The logic determining unit may comprise an AND gate for outputting a pulse signal having a pulse width varying in accordance with a variation in load depending on the material of the cooking container such that the pulse width of the pulse signal varies within a range from 1/4 to 1/2 of a period of the switching pulse signal when the material of the cooking material is magnetic, while varying within a range from 0 to 1/4 of the period of the switching pulse signal when the material of the cooking material is non-magnetic.

The microcomputer may comprise: a magnetic material determining unit for comparing the DC voltage outputted from the DC voltage smoothing unit with a reference value, thereby determining that the material of the cooking container is magnetic when the DC voltage is not less than 1/4 of the control voltage source(Vce), while determining that the material of the cooking container is non-magnetic when the DC voltage is less than 1/4 of the control voltage source(Vce); and an inverter controller for activating the inverter circuit when it is determined that the material of the cooking container is magnetic, so as to heat the cooking container.

In accordance with another aspect, the present invention provides a method for operating an induction heating cooker, comprising the steps of: A) operating an inverter circuit included in the induction heating cooker upon an initial operation of the induction heating cooker; B) outputting, as a material discriminating signal, a pulse signal having a pulse width varying depending on a material of a cooking container placed in the induction heating cooker, based on a resonant capacitor voltage of the inverter circuit and a switching pulse signal of the inverter circuit; C) determining whether the material of the cooking container is magnetic or non-magnetic, based on the material discriminating signal outputted at the step B); and D) operating the inverter circuit when it is determined at the step C) that the material of the cooking container is magnetic, thereby heating the cooking container.

The step C) may comprise the steps of: converting the pulse signal outputted at the step B) into a DC voltage; comparing the DC voltage with a predetermined reference value; determining that the material of the cooking container is magnetic when the DC voltage has a level not less than 25% of the control voltage source(Vce); and determining that the material of the cooking container is non-magnetic when the DC voltage has a level less than 25% of the control voltage source(Vce).

In accordance with the present invention, it is possible to accurately discriminate the material of the cooking container, irrespective of the load of the cooking container. Thus, it is possible to prevent the induction heating cooker from operating erroneously due to an erroneous determination of the container material discriminating unit as to the material of the cooking container.

### BRIEF DESCRIPTION OF THE DRAWINGS

The above objects, and other features and advantages of the present invention will become more apparent after reading the following detailed description when taken in conjunction with the drawings, in which:
FIG. 1 is a block diagram illustrating configurations of an inverter circuit and a container material discriminating unit included in a conventional induction heating cooker;
FIG. 2 is a block diagram illustrating the configuration of a container material discriminating unit included in an induction heating cooker according to the present invention;
FIG. 3 is a graph depicting the waveform of current flowing through a coil included in an inverter circuit according to the present invention, and the waveform of a resonant capacitor voltage according to the present invention;
FIG. 4 is a waveform diagram of signals generated in association with operation of the container material discriminating unit according to the present invention;
FIG. 5 is a circuit diagram illustrating a detailed configuration of the container material discriminating unit according to the present invention; and
FIG. 6 is a flow chart illustrating an operation of the container material discriminating unit in the induction heating cooker according to the present invention.

### DESCRIPTION OF THE PREFERRED EMBODIMENTS

Now, embodiments of an induction heating cooker according to the present invention will be described in detail with reference to the annexed drawings.

Although there may be various embodiments associated with the induction heating cooker according to the present invention, the following description will be given in conjunction with the most preferred embodiment.

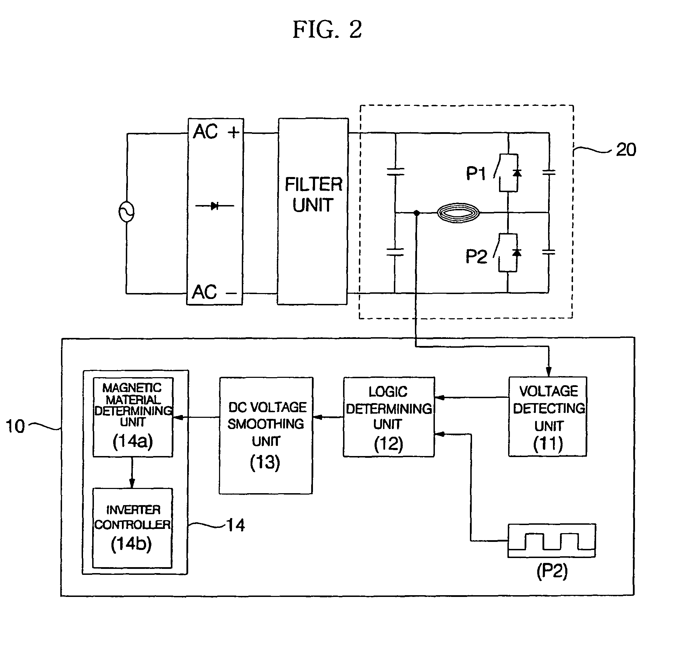

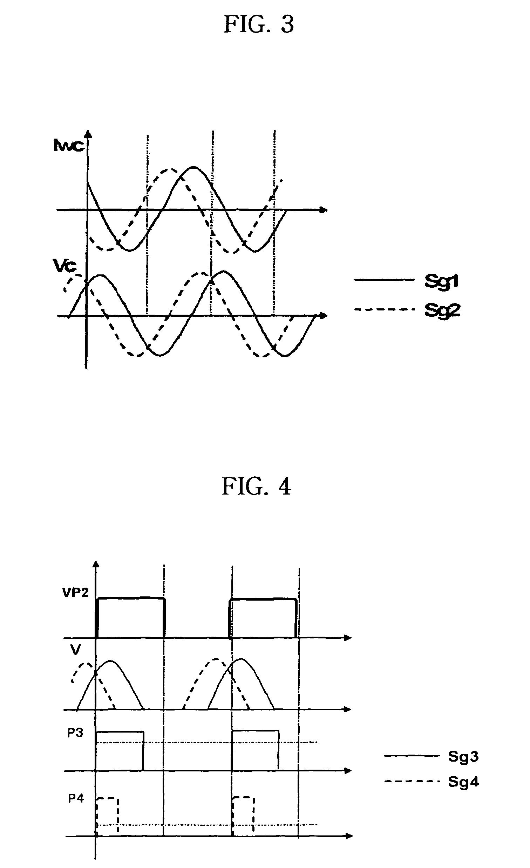

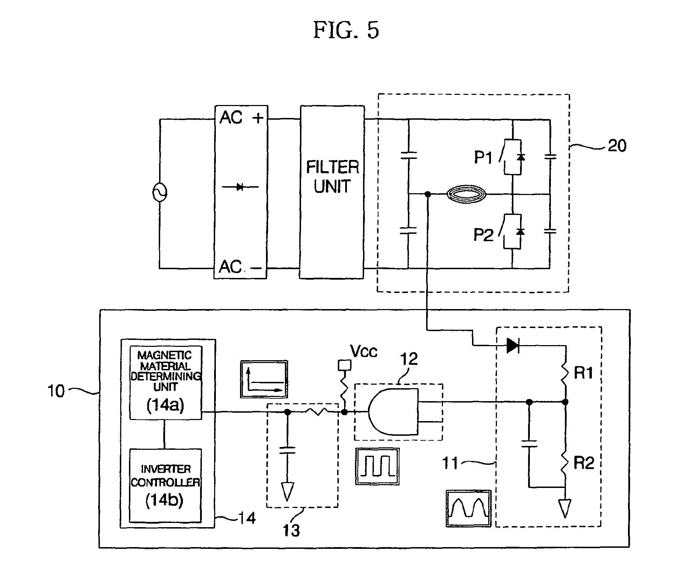

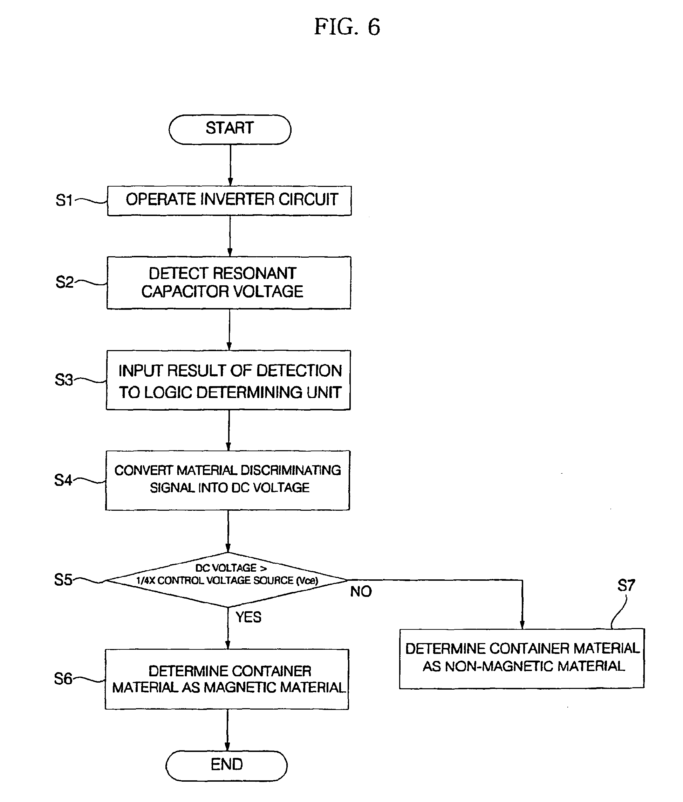

FIG. 2 is a block diagram illustrating the configuration of a container material discriminating unit included in the induction heating cooker according to the present invention. FIG. 3 is a graph depicting the waveform of current flowing through a coil included in an inverter circuit according to the present invention, and the waveform of a resonant capacitor voltage according to the present invention. FIG. 4 is a waveform diagram of signals generated in association with operation of the container material discriminating unit according to the present invention. FIG. 5 is a circuit diagram illustrating a detailed configuration of the container material discriminating unit according to the present invention. FIG. 6 is a flow chart illustrating an operation of the container material discriminating unit in the induction heating cooker according to the present invention.

The induction heating cooker of the present invention includes a power supply adapted to supply a DC voltage. The power supply includes a rectifier (not shown) for rectifying a general AC voltage, thereby producing a DC voltage, and a filter (not shown) for filtering the rectified voltage. The induction heating cooker also includes an inverter circuit 20 for heating a cooking container placed in the induction heating cooker, using the voltage supplied from the power supply.

In particular, the induction heating cooker of the present invention further includes a container material discriminating unit 10 for discriminating whether the material of a cooking container placed in the induction heating cooker is magnetic or non-magnetic, based on a resonant capacitor voltage of the inverter circuit 20, and a switching pulse signal of the inverter circuit 20, so as to control the heating operation of the induction heating cooker.

As shown in FIG. 2, the container material discriminating unit 10 includes a logic determining unit 12 for comparing the resonant capacitor voltage of the inverter circuit 20 with the switching pulse signal of the inverter circuit 20, thereby outputting a pulse signal having a pulse width determined depending on the material of the cooking container.

The container material discriminating unit 10 also includes a voltage detecting unit 11. The voltage detecting unit 11 detects the resonant capacitor voltage of the inverter circuit 20, half-wave rectifies the detected voltage, divides the half-wave-rectified voltage, and outputs the resultant voltage to the logic determining unit 12. The container material discriminating unit 10 further includes a DC voltage smoothing unit 13 for converting the pulse signal outputted from the logic determining unit 12 into a DC voltage, and a microcomputer 14 for determining, based on the DC voltage, whether the material of the cooking container is magnetic or non-magnetic, and controlling the inverter circuit 20, based on the result of the determination.

The voltage detecting unit 11 is electrically connected to the inverter circuit 20 to detect the resonant capacitor voltage of the inverter circuit 20. The voltage detecting unit 11 half-wave rectifies the detected voltage, divides the half-wave-rectified voltage, and outputs the resultant voltage to the logic determining unit 12.

In particular, the container material discriminating unit 10 utilizes characteristics of a resonance frequency varying depending on a variation in the load according to a variation in the material of the cooking container, in order to discriminate the material of the cooking container. That is, the voltage detecting unit 11 detects the resonant capacitor voltage of the inverter circuit 20, and sends a voltage signal indicative of the result of the detection to the logic determining unit 12. The voltage signal outputted from the voltage detecting unit 11 has a particular phase corresponding to the material of the cooking container, so that it is possible to determine the material of the cooking container, based on a variation in the phase of the voltage signal.

The logic determining unit 12 receives the voltage signal outputted from the voltage detecting unit 11 and the switching pulse signal of the inverter circuit 20, and compares the received signals, thereby outputting a material discriminating signal. The material discriminating signal has a pulse width varying depending on the material of the cooking container within respective phase variation ranges of the switching pulse signal and resonance capacitor voltage.

The DC voltage smoothing unit 13 receives the material discriminating signal from the logic determining unit 12, and outputs the material discriminating signal in the form of a smooth DC voltage. The DC voltage from the DC voltage smoothing unit 13 is applied to the microcomputer 14. Based on the DC voltage applied thereto, the microcomputer 14 determines whether the material of the cooking container is magnetic or non-magnetic. Based on the result of the determination, the microcomputer 14 controls the inverter circuit 20.

The microcomputer 14 includes a magnetic material determining unit 14a for comparing the DC voltage outputted from the DC voltage smoothing unit 13 with a reference value stored in the magnetic material determining unit 14a, thereby determining whether the material of the cooking container is magnetic or non-magnetic, and an inverter controller 14b for activating the inverter circuit 20 when it is determined that the material of the cooking container is magnetic, so as to heat the cooking container.

If the DC voltage is not less than 1/4 of the control voltage source(Vce), the magnetic material determining unit 14a determines that the material of the cooking container is magnetic. If not, the magnetic material determining unit 14a determines that the material of the cooking container is non-magnetic.

As shown in FIG. 3, the waveform of current flowing through the coil of the inverter circuit 20 and the waveform of the resonant capacitor voltage of the inverter circuit 20 exhibit a variation in phase depending on the material of the cooking container. That is, different phases are exhibited in accordance with whether the material of the cooking container is magnetic or non-magnetic, as indicated by waveforms Sg1 and Sg2, respectively.

That is, the current I_{wc} flowing through the coil exhibits different phases when the material of the cooking container is magnetic (Sg1) and when the material of the cooking container is non-magnetic (Sg2), respectively. Similarly, the resonant capacitor voltage V_{c}, which has a phase difference of 90° from the coil current, exhibits different phases when the material of the cooking container is magnetic (Sg1) and when the material of the cooking container is non-magnetic (Sg2), respectively.

The coil current and resonant capacitor voltage have different phases, respectively. The voltage detecting unit 11 detects the resonant capacitor voltage V_{c}, and outputs a voltage signal indicative of the result of the detection. In accordance with the present invention, the material of the cooking container is determined, using the phase variation characteristics of the resonant capacitor voltage V_{c} depending on the material of the cooking container.

The logic determining unit 12 compares the voltage signal outputted from the voltage detecting unit 11 with the switching pulse signal of the inverter circuit 20, and outputs a material discriminating signal, which is a pulse signal. As shown in FIG. 4, the voltage signal has a level varying depending on whether the material of the cooking material is magnetic or non-magnetic, as indicated by waveforms Sg3 and Sg4.

The logic determining unit 12 logically ANDs the output voltage signal of the voltage detecting unit 11 and the switching pulse signal of the inverter circuit 20, thereby outputting a pulse signal. The pulse signal outputted from the logic determining unit 12 is set to have a pulse width ranging from 1/4 to 1/2 of the period of the switching pulse signal when the material of the cooking material is magnetic (Sg3). When the material of the cooking material is non-magnetic (Sg4), the pulse signal is set to have a pulse width ranging from 0 to 1/4 of the period of the switching pulse signal.

Thus, the material discriminating signal outputted from the logic determining unit 12 has a pulse width varying depending on whether the material of the cooking container is magnetic or non-magnetic. As shown in FIG. 4, the logic determining unit 12 outputs a pulse signal P3 when the material of the cooking container is magnetic (Sg3), while outputting a pulse signal P4 when the material of the cooking container is non-magnetic.

Hereinafter, the configuration of the container material discriminating unit 10 will be described in more detail with reference to FIG. 5.

The voltage detecting unit 11 includes a diode, a capacitor and a plurality of resistors. In the illustrated case, two resistors, that is, first and second resistors R1 and R2, are used. The voltage detecting unit 11 detects the voltage of the resonant capacitor included in the inverter circuit 20, half-wave rectifies the detected voltage, divides the half-wave-rectified voltage, and outputs the resultant voltage to the logic determining unit 12. The voltage division is carried out in accordance with the resistance ratio between the first and second resistors R1 and R2.

The logic determining unit 12 includes an AND gate. The AND gate receives the output voltage signal from the voltage detecting unit 11 and the switching pulse signal of the inverter circuit 20, and compares the received signals. Thus, the AND gate outputs a material discriminating signal having a pulse width varying depending on whether the material of the cooking container is magnetic or non-magnetic.

In this case, the pulse width of the material discriminating signal outputted from the logic determining unit 12 is variable within respective phase variation ranges of the switching pulse signal and resonance capacitor voltage in accordance with the present invention. Accordingly, it is possible to output a signal having a pulse width varying depending on the material of the cooking container, irrespective of a variation in the load of the cooking container.

The DC voltage smoothing unit 13 includes a low pass filter consisting of a resistor and a capacitor. With this configuration, the DC voltage smoothing unit 13 filters the material discriminating signal outputted from the logic determining unit 12, thereby outputting a smooth DC voltage.

Operation of the induction heating cooker having the above-described configuration according to the present invention will be described with reference to FIG. 6, which is a flow chart illustrating the operation sequence of the container material discriminating unit.

The induction heating cooker receives an input DC voltage from the power supply, which rectifies and filters an input AC voltage. By the input DC voltage, the inverter circuit 20 is operated (S1).

Thereafter, a resonant capacitor voltage generated in accordance with the operation of the inverter circuit 20 is detected by the voltage detecting unit 11. The detected resonant capacitor voltage is sine-wave rectified. The rectified voltage is divided by the resistors of the voltage detecting unit 11 in accordance with the resistance ratio between the resistors. The divided voltage is outputted (S2).

The divided voltage is applied to the AND gate of the logic determining unit 12, along with the switching pulse signal of the inverter circuit 20, so that the applied signals are compared (S3).

Where the material of the cooking container is magnetic, the AND gate outputs, as a material discriminating signal, a pulse signal having a pulse width corresponding to 1/4 to 1/2 of the period of the switching pulse signal. On the other hand, where the material of the cooking container is non-magnetic, the AND gate outputs, as a material discriminating signal, a pulse signal having a pulse width corresponding to 0 to 1/2 of the period of the switching pulse signal.

The material discriminating signal passes through the low pass filter of the DC voltage smoothing unit 13, which consists of one resistor and one capacitor, so that the material discriminating signal is outputted in the form of a smooth DC voltage (S4).

The smooth DC voltage is applied to the microcomputer 14, which in turn compares the DC voltage with a reference value stored in the microcomputer 14 (S5).

If the DC voltage has a level corresponding to 25% or more of the control voltage source(Vce), the microcomputer 14 determines that the material of the cooking container is magnetic (S6). If not, the microcomputer 14 determines that the material of the cooking container is non-magnetic (S7).

When it is determined that the material of the cooking container is magnetic, the inverter circuit 20 is operated to heat the cooking container. On the other hand, when it is determined that the material of the cooking container is non-magnetic, the inverter circuit 20 is not operated.

As apparent from the above description, the induction heating cooker having the above-described configuration according to the present invention can accurately discriminate the material of the cooking container, irrespective of the load of the cooking container. That is, it is possible to prevent the induction heating cooker from operating erroneously due to an erroneous determination of the container material discriminating unit as to the material of the cooking container, which may occur at the boundary of the load between a load value corresponding to the magnetic material and a load value corresponding to the non-magnetic material.

Since the induction heating cooker includes the container material discriminating unit, which is adapted to discriminate whether the material of the cooking container is magnetic or non-magnetic, it is possible to use a simple voltage detector, without using an expensive current detector. The logic determining unit can also be implemented using a general logic element, that is, an AND gate. Accordingly, a great reduction in manufacturing costs is achieved.

In accordance with the reduction in manufacturing costs achieved using a simple logic configuration, there are an enhancement in the reliability of products and an improvement in price competitiveness.

## Claims

1. An induction heating cooker comprising:
a power supply for rectifying an AC voltage, filtering the rectified voltage, and supplying the filtered voltage as an input voltage of the induction heating cooker;
an inverter circuit (20) for heating a cooking container placed in the induction heating cooker upon an initial operation of the induction heating cooker using the voltage supplied from the power supply; and
a container material discriminating unit (10) for discriminating whether a material of the cooking container is magnetic or non-magnetic, whereby the cooking container is selectively heated in accordance with the result of the discrimination, **characterized in that** the container material discriminating unit (10) includes a voltage detecting unit (11) and a logic determining unit (12), wherein the voltage detecting unit (11) is adapted to detect a resonant capacitor voltage (Vc) of the inverter circuit (20), wherein the resonant capacitor voltage (Vc) having different phases depending on the material of the cooking container, wherein the logic determining unit (12) is adapted to logically combine the voltage outputted by the voltage detecting unit (11) with a switching pulse signal of the inverter circuit (20), thereby outputting a pulse signal (P3, P4) having a pulse width varying depending on whether the material of the cooking container is magnetic or non-magnetic.

2. The induction heating cooker according to claim 1, wherein the container material discriminating unit (10) comprises:
the voltage detecting unit (11) for detecting the resonant capacitor voltage of the inverter circuit (20), half-wave rectifying the detected voltage, dividing the half-wave-rectified voltage, and outputting the divided voltage as the result of the detection.

3. The induction heating cooker according to claim 2, wherein the container material discriminating unit (10) further comprises:
a DC voltage smoothing unit (13) for converting the pulse signal outputted from the logic determining unit (12) into a DC voltage; and
a microcomputer (14) for determining, based on the DC voltage, whether the material of the cooking container is magnetic or non-magnetic, and controlling the inverter circuit (20), based on the result of the determination.

4. The induction heating cooker according to claim 2, wherein the logic determining unit (12) comprises an AND gate for outputting a pulse signal having a pulse width varying in accordance with a variation in load depending on the material of the cooking container such that the pulse width of the pulse signal varies within a range from 1/4 to 1/2 of a period of the switching pulse signal when the material of the cooking material is magnetic, while varying within a range from 0 to 1 /4 of the period of the switching pulse signal when the material of the cooking material is non-magnetic.

5. The induction heating cooker according to claim 2, wherein the voltage detecting unit (11) comprises a plurality of resistors for dividing a voltage applied thereto in accordance with a resistance ratio thereof.

6. The induction heating cooker according to claim 3, wherein the DC voltage smoothing unit (13) comprises a low pass filter for smoothing the pulse signal received from the logic determining unit (12) in the form of a DC voltage.

7. The induction heating cooker according to claim 3, wherein the microcomputer (14) comprises:
a magnetic material determining unit (14a) for comparing the DC voltage outputted from the DC voltage smoothing unit (13) with a reference value, thereby determining that the material of the cooking container is magnetic when the DC voltage is not less than 1/4 of the control voltage source (Vce), while determining that the material of the cooking container is non-magnetic when the DC voltage is less than 1 /4 of the control voltage source (Vce); and
an inverter controller (14b) for activating the inverter circuit (20) when it is determined that the material of the cooking container is magnetic, so as to heat the cooking container.

8. The induction heating cooker according to claim 1, wherein the power supply comprises:
a power source for supplying a general AC voltage;
a rectifier for rectifying the AC voltage: and
a filter for filtering the rectified voltage.

9. A method for operating an induction heating cooker, comprising the steps of:
A) operating an inverter circuit (20) included in the induction heating cooker upon an initial operation of the induction heating cooker;
**characterized by the steps of:**
B) detecting a resonant capacitor voltage (Vc) of the inverter circuit (20) and outputting a signal based on the detection, wherein the resonant capacitor voltage (Vc) having different phases depending on the material of the cooking container,
logical combining the signal based on the detection with a switching pulse signal of the inverter circuit (20);
outputting based on the result of the logical combination, as a material discriminating signal, a pulse signal (P3, P4) having a pulse width varying depending on a material of a cooking container placed in the induction heating cooker,
C) determining whether the material of the cooking container is magnetic or non-magnetic, based on the material discriminating signal outputted at the step B); and
D) operating the inverter circuit (20) when it is determined at the step C) that the material of the cooking container is magnetic, thereby heating the cooking container.

10. The method according to claim 9, wherein the step B) comprises the steps of:
detecting the resonant capacitor voltage of the inverter circuit(20);
sine-wave rectifying the detected voltage;
dividing the rectified voltage, comparing the divided voltage with the switching pulse signal of the inverter circuit (20); and
outputting the result of the comparison as the material discriminating signal.

11. The method according to claim 9, wherein the step C) comprises the steps of:
converting the pulse signal outputted at the step B) into a DC voltage;
comparing the DC voltage with a predetermined reference value;
determining that the material of the cooking container is magnetic when the DC voltage has a level not less than 25% of the control voltage source (Vce); and
determining that the material of the cooking container is non-magnetic when the DC voltage has a level less than 25% of the control voltage source (Vce).

## Patentansprüche

1. Induktionsheizungskochgerät, umfassend:
eine Stromversorgung zum Gleichrichten einer Wechselspannung, Filtern der gleichgerichteten Spannung und Liefern der gefilterten Spannung als eine Eingangsspannung des Induktionsheizungskochgerätes;
eine Inverterschaltung (20), um einen Kochbehälter, der im Induktionsheizungskochgerät angeordnet ist, in einem anfänglichen Betrieb des Induktionsheizungskochgeräts unter Verwendung der von der Stromversorgung gelieferten Spannung zu erhitzen; und
eine Behältermaterial-Unterscheidungseinheit (10), um zu unterscheiden, ob ein Material des Kochbehälters magnetisch oder nicht magnetisch ist, wodurch der Kochbehälter in Übereinstimmung mit dem Ergebnis der Unterscheidung wahlweise erhitzt wird, **dadurch gekennzeichnet, dass** die Behältermaterial-Unterscheidungseinheit (10) eine Spannungserfassungseinheit (11) und eine Logikbestimmungseinheit (12) umfasst, wobei die Spannungserfassungseinheit (11) dazu ausgelegt ist, eine Resonanz-Kondensatorspannung (Vc) der Inverterschaltung (20) zu erfassen, wobei die Resonanz-Kondensatorspannung (Vc) in Abhängigkeit vom Material des Kochbehälters verschiedene Phasen hat, wobei die Logikbestimmungsschaltung (12) dazu ausgelegt ist, die von der Spannungserfassungseinheit (11) ausgegebene Spannung mit einem Schaltimpulssignal der Inverterschaltung (20) logisch zu kombinieren, um **dadurch** ein Impulssignal (P3, P4) auszugeben, das eine Impulsbreite besitzt, die sich in Abhängigkeit davon, ob das Material des Kochbehälters magnetisch oder nicht magnetisch ist, ändert.

2. Induktionsheizungskochgerät nach Anspruch 1, wobei die Behältermaterial-Unterscheidungseinheit (10) umfasst:
eine Spannungserfassungseinheit (11), um eine Resonanz-Kondensatorspannung der Inverterschaltung (20) zu erfassen, die erfasste Spannung halbwellengleichzurichten, die halbwellengleichgerichtete Spannung zu teilen und die geteilte Spannung als das Ergebnis der Erfassung auszugeben.

3. Induktionsheizungskochgerät nach Anspruch 2, wobei die Behältermaterial-Unterscheidungseinheit (10) ferner umfasst:
eine Gleichspannungsglättungseinheit (13), um das von der Logikbestimmungseinheit (12) ausgegebene Impulssignal in eine Gleichspannung umzusetzen; und
einen Mikrocomputer (14), um anhand der Gleichspannung zu bestimmen, ob das Material des Kochbehälters magnetisch oder nicht magnetisch ist, und um die Inverterschaltung (20) anhand des Ergebnisses der Bestimmung zu steuern.

4. Induktionsheizungskochgerät nach Anspruch 2, wobei die Logikbestimmungseinheit (12) ein UND-Gatter umfasst, um ein Impulssignal mit einer Impulsbreite, die sich gemäß einer Last ändert, die von dem Material des Kochbehälters abhängt, auszugeben, derart, dass die Impulsbreite des Impulssignals sich innerhalb eines Bereichs von 1/4 bis 1/2 einer Periode des Schaltimpulssignals ändert, wenn das Material des Kochmaterials magnetisch ist, während es sich innerhalb eines Bereichs von 0 bis 1/4 der Periode des Schaltimpulssignals verändert, wenn das Material des Kochmaterials nicht magnetisch ist.

5. Induktionsheizungskochgerät nach Anspruch 2, wobei die Spannungserfassungseinheit (11) mehrere ohmsche Widerstände umfasst, um eine daran angelegte Spannung entsprechend einem Widerstandsverhältnis hiervon zu teilen.

6. Induktionsheizungskochgerät nach Anspruch 3, wobei die Gleichspannungsglättungseinheit (13) ein Tiefpassfilter umfasst, um das von der Logikbestimmungseinheit (12) empfangene Impulssignal in die Form einer Gleichspannung zu glätten.

7. Induktionsheizungskochgerät nach Anspruch 3, wobei der Mikrocomputer (14) umfasst:
eine Magnetmaterial-Bestimmungseinheit (14a), um die von der Gleichspannungsglättungseinheit (13) ausgegebene Gleichspannung mit einem Referenzwert zu vergleichen, um **dadurch** zu bestimmen, dass das Material des Kochbehälters magnetisch ist, wenn die Gleichspannung nicht niedriger als 1/4 der Steuerspannungsquelle (Vce) ist, während bestimmt wird, dass das Material des Kochbehälters nicht magnetisch ist, wenn die Gleichspannung niedriger als 1/4 der Steuerspannungsquelle (Vce) ist; und
eine Inverter-Steuereinheit (14b), um die Inverterschaltung (20) zu aktivieren, wenn bestimmt wird, dass das Material des Kochbehälters magnetisch ist, um den Kochbehälter zu erhitzen.

8. Induktionsheizungskochgerät nach Anspruch 1, wobei die Stromversorgung umfasst:
eine Stromquelle, um eine allgemeine Wechselspannung zu liefern;
einen Gleichrichter, um die Wechselspannung gleichzurichten; und
ein Filter, um die gleichgerichtete Spannung zu filtern.

9. Verfahren zum Betreiben eines Induktionsheizungskochgeräts, das die folgenden Schritte umfasst:
A) Betreiben einer in dem Induktionsheizungskochgerät enthaltenen Inverterschaltung (20) in einem anfänglichen Betrieb des Induktionsheizungskochgeräts;
**gekennzeichnet durch die folgenden Schritte:**
B) Erfassen einer Resonanz-Kondensatorspannung (Vc) der Inverterschaltung (20) und Ausgeben eines Signals anhand der Erfassung, wobei die Resonanz-Kondensatorspannung (Vc) in Abhängigkeit vom Material des Kochbehälters verschiedene Phasen hat,
logisches Kombinieren des auf der Erfassung basierenden Signals mit einem Schaltimpulssignal der Inverterschaltung (20);
anhand des Ergebnisses der logischen Kombination Ausgeben eines Impulssignals (P3, P4), das eine Impulsbreite besitzt, die sich in Abhängigkeit von einem Material eines in dem Induktionsheizungskochgerät angeordneten Kochbehälters ändert, als Materialunterscheidungssignal,
C) Bestimmen, ob das Material des Kochbehälters magnetisch oder nicht magnetisch ist, anhand des Materialunterscheidungssignals, das im Schritt B) ausgegeben wird; und
D) Betreiben der Inverterschaltung (20), wenn im Schritt C) bestimmt wird, dass das Material des Kochbehälters magnetisch ist, um **dadurch** den Kochbehälter zu erhitzen.

10. Verfahren nach Anspruch 9, wobei der Schritt B) die folgenden Schritte umfasst:
Erfassen der Resonanz-Kondensatorspannung der Inverterschaltung (20);
Sinuswellengleichrichten der erfassten Spannung;
Teilen der gleichgerichteten Spannung und Vergleichen der geteilten Spannung mit dem Schaltimpulssignal der Inverterschaltung (20); und
Ausgeben des Ergebnisses des Vergleichs als das Materialunterscheidungssignal.

11. Verfahren nach Anspruch 9, wobei der Schritt C) die folgenden Schritte umfasst:
Umsetzen des im Schritt B) ausgegebenen Impulssignals in eine Gleichspannung;
Vergleichen der Gleichspannung mit einem vorgegebenen Referenzwert;
Bestimmen, dass das Material des Kochbehälters magnetisch ist, wenn die Gleichspannung einen Pegel hat, der nicht niedriger als 25 % der Steuerspannungsquelle (Vce) ist; und
Bestimmen, dass das Material des Kochbehälters nicht magnetisch ist, wenn die Gleichspannung einen Pegel hat, der niedriger als 25 % der Steuerspannungsquelle (Vce) ist.

## Revendications

1. Dispositif de cuisson à chauffage par induction, comprenant :
une alimentation électrique pour redresser une tension alternative, filtrer la tension redressée et fournir la tension filtrée en tant que tension d'entrée du dispositif de cuisson à chauffage par induction ;
un circuit inverseur (20) pour chauffer un récipient de cuisson placé dans le dispositif de cuisson dès la mise en marche du dispositif de cuisson à chauffage par induction à l'aide de la tension fournie par l'alimentation électrique ; et
une unité de distinction (10) de matière de récipient pour distinguer si une matière du récipient de cuisson est magnétique ou amagnétique, grâce à quoi le récipient de cuisson est chauffé sélectivement d'après de résultat de la distinction, **caractérisé en ce que** l'unité de distinction (10) de matière de récipient comporte une unité de détection (11) de tension et une unité de détermination logique (12), l'unité de détection (11) de tension étant conçue pour détecter une tension (Vc) de condensateur de résonance du circuit inverseur (20), la tension (Vc) de condensateur de résonance ayant des phases différentes selon la matière du récipient de cuisson, l'unité de détermination logique (12) étant conçue pour combiner par une opération logique la tension délivrée par l'unité de détection (11) de tension avec un signal impulsionnel de commutation du circuit inverseur (20), en délivrant de la sorte un signal impulsionnel (P3, P4) à durée d'impulsion variant selon que la matière du récipient de cuisson est magnétique ou amagnétique.

2. Dispositif de cuisson à chauffage par induction selon la revendication 1, dans lequel l'unité de distinction (10) de matière de récipient comporte :
l'unité de détection (11) de tension pour détecter la tension de condensateur de résonance du circuit inverseur (20), effectuer un redressement demi-onde de la tension détectée, diviser la tension à redressement demi-onde et délivrer la tension divisée en tant que résultat de la détection.

3. Dispositif de cuisson à chauffage par induction selon la revendication 2, dans lequel l'unité de distinction (10) de matière de récipient comporte en outre :
une unité de lissage (13) de tension continue pour convertir en tension continue le signal impulsionnel délivré par l'unité de détermination logique (12) ; et
un microordinateur (14) pour déterminer, d'après la tension continue, si la matière du récipient de cuisson est magnétique ou amagnétique, et commander le circuit inverseur (20) d'après le résultat de la détermination.

4. Dispositif de cuisson à chauffage par induction selon la revendication 2, dans lequel l'unité de détermination logique (12) comporte une porte ET afin de délivrer un signal impulsionnel à durée d'impulsion variant en fonction d'une variation de charge dépendant de la matière du récipient de cuisson de façon que la durée d'impulsion du signal impulsionnel varie dans un intervalle d'un quart à une moitié d'une période du signal impulsionnel de commutation lorsque la matière du récipient de cuisson est magnétique tout en variant dans un intervalle de 0 à un quart de la période du signal impulsionnel de commutation lorsque la matière du récipient de cuisson est amagnétique.

5. Dispositif de cuisson à chauffage par induction selon la revendication 2, dans lequel l'unité de détection (11) de tension comporte une pluralité de résistances pour diviser une tension appliquée à celle-ci en fonction d'un rapport de résistance de celle-ci.

6. Dispositif de cuisson à chauffage par induction selon la revendication 3, dans lequel l'unité de lissage (13) de tension continue comporte un filtre passe-bas pour lisser sous la forme d'une tension continue le signal impulsionnel reçu de l'unité de détermination logique (12).

7. Dispositif de cuisson à chauffage par induction selon la revendication 3, dans lequel le microordinateur (14) comporte :
une unité de détermination (14a) de matière magnétique pour comparer la tension continue délivrée par l'unité de lissage (13) de tension continue avec une valeur de référence, en déterminant de ce fait que la matière du récipient de cuisson est magnétique quand la tension continue n'est par inférieure à un quart de l'alimentation en tension de commande (Vce), tout en déterminant que la matière du récipient de cuisson est amagnétique quand la tension continue est inférieure à un quart de l'alimentation en tension de commande (Vce) ; et
un moyen de commande (14b) d'inverseur pour activer le circuit inverseur (20) quand il est déterminé que la matière du récipient de cuisson est magnétique, afin de chauffer le récipient de cuisson.

8. Dispositif de cuisson à chauffage par induction selon la revendication 1, dans lequel l'alimentation électrique comporte :
une source d'électricité pour fournir une tension alternative générale ;
un redresseur pour redresser la tension alternative ; et
un filtre pour filtrer la tension redressée.

9. Procédé pour faire fonctionner un dispositif de cuisson à chauffage par induction, comprenant les étapes consistant à :
A) mettre en marche un circuit inverseur (20) inclus dans le dispositif de cuisson à chauffage par induction dès la mise en marche du dispositif de cuisson à chauffage par induction ;
**caractérisé par les étapes consistant à :**
B) détecter une tension (Vc) de condensateur de résonance du circuit inverseur (20) et délivrer un signal en fonction de la détection, la tension (Vc) de condensateur de résonance ayant des phases différentes selon la matière du récipient de cuisson ;
combiner par une opération logique le signal reposant sur la détection avec un signal impulsionnel de commutation du circuit inverseur (20) ;
délivrer en fonction du résultat de la combinaison logique, en tant que signal de distinction de matière, un signal impulsionnel (P3, P4) à durée d'impulsion variant en fonction d'une matière d'un récipient de cuisson placé dans le dispositif de cuisson à chauffage par induction ;
C) déterminer si la matière du récipient de cuisson est magnétique ou amagnétique d'après le signal de distinction de matière délivré lors de l'étape B) ; et
D) mettre en marche le circuit inverseur (20) quand il est déterminé, lors de l'étape C), que la matière du récipient de cuisson est magnétique, en chauffant de la sorte le récipient de cuisson.

10. Procédé selon la revendication 9, dans lequel l'étape B) comporte les étapes consistant à :
détecter la tension de condensateur de résonance du circuit inverseur (20) ;
redresser en régime sinusoïdal la tension détectée ;
diviser la tension redressée, comparer la tension divisée avec le signal impulsionnel de commutation du circuit inverseur (20) ; et
délivrer le résultat de la comparaison en tant que signal de distinction de matière.

11. Procédé selon la revendication 9, dans lequel l'étape C) comporte les étapes consistant à :
convertir en tension continue le signal impulsionnel délivré lors de l'étape B) ;
comparer la tension continue avec une valeur de référence prédéterminée ;
déterminer que la matière du récipient de cuisson est magnétique lorsque la tension continue a un niveau non inférieur à 25 % de la source de tension de commande (Vce) ; et
déterminer que la matière du récipient de cuisson est amagnétique lorsque la tension continue a un niveau inférieur à 25 % de la source de tension de commande (Vce).
